# EUROPEAN PATENT APPLICATION

(11) **EP 4 603 687 A1**
(43) Date of publication of application: **20.08.2025**
(21) Application number: 25157936.3
(22) Date of filing: 14.02.2025
(51) Int. Cl.: F02C 3/30, F01D 1/36, F02C 5/12, F02K 7/02, F02K 7/06

(54) **HEAT ENGINE**

(30) Priority: 14.02.2024 IT 202400003118
(71) Applicant: Gatewers S.r.l., 00189 Romait (IT)
(72) Inventor: COLETTA, Luca, 01012 Capranica (IT)
(74) Representative: Cinquantini, Bruno

(57) **Abstract**

The engine comprises a detonation chamber (8) for mixture combustion, a mixer (2) to receive oxygen, water vapor and fuel with a combustion rate greater than 1 meter per second, with which to form a mixture and distribute the mixture in the detonation chamber (8), a one-way valve (9) with orifices configured for mixture distribution in the detonation chamber (8), including ferromagnetic spheres (14) free to vibrate to open and close the mixture passage, an exhaust nozzle (4) of convergent-divergent configuration capable of expelling flue gases at supersonic speeds, a high-voltage circuit, a plurality of spark plugs (3) ignited by the high-voltage circuit, a gas NOx elimination circuit, a needle turbine (6), a water injection system, a fuel injection system, a control circuit for motor management and sensors for monitoring operating conditions.

## Description

### FIELD OF THE INVENTION

The present invention relates to the field of heat engines, which use detonation to obtain propulsive thrust, which combined with a special turbine enables the generation of motive power, which in turn can also be converted into electricity with the help of an alternator.

The combination of this propulsive engine with the specific turbine described below allows it to generate motive power in the form of rotation at high speeds. It follows that it can be used in all applications where traction or rotation is needed such as land applications if the engine is directly applied to the gearbox assembly of a vehicle, or marine if it drives the propeller assembly directly. In combination with an alternator it is configured as an electric generator that can be scaled to different sizes and applied to different contexts. Among the best possible applications even considering hydrogen as a fuel is to be used together with a battery pack and an electric generator to power hydrogen-electric or gasoline-electric hybrid cars achieving efficiencies never seen before.

### BACKGROUND ART

The present invention has some features in common with 3 main categories of engines the RDE, PDE and turbofan turbogenerators. Below we analyze the main aspects of these known engines.

RDE, Rotating Detonation Engines are a type of propulsion that uses detonation, rather than deflagration (subsonic combustion), to burn fuel. This technology has attracted much interest for its potential applications in aerospace because it offers the promise of greater efficiency than conventional jet engines.

Key features of RDEs are :
Supersonic combustion: Unlike conventional jet engines where combustion occurs subsonically (deflagration), in RDEs combustion occurs supersonically (detonation) following a rotary flow. This means that a shock wave propagates through the mixture of fuel and oxidizer, burning it very rapidly.
Structural simplicity: RDEs, theoretically, can have fewer moving parts than conventional jet engines, which could lead to lighter and less expensive engines to produce.
Efficiency: RDEs can offer greater thermodynamic efficiency because they take advantage of detonation, which is a more complete and rapid combustion process than deflagration.

However, there are several challenges that make RDEs not yet practical for many applications:
Controlling detonation: Detonation is a much more violent and less controllable process than deflagration. Maintaining a stable detonation in rotary motion without degenerating into deflagration is not easy.
Wear and stress: due to the violent nature of detonation, RDEs can subject combustion chamber materials to extremely high thermal and mechanical stress. This could lead to reduced engine operating life due to accelerated wear.
Noise: Detonation produces a much louder noise than deflagration, potentially making RDEs much louder than conventional engines.

Temperature management, generally RDE engines need a major cooling system to prevent wall melting and specific treatments to materials

Pulse detonation engines PDE are a class of jet aircraft engines that operate through cyclic detonation of fuel and oxidizer. Unlike conventional gas turbine engines, which burn fuel in a stable flame, PDEs burn fuel through detonation waves, which are basically controlled explosions traveling at supersonic speeds.

Key steps on how they work are:
Injection: Fuel and oxidant (which can be atmospheric air) are injected into a tubular combustion chamber.
Mixing: The fuel and oxidizer mix inside the chamber.
Ignition: Once the mixture is in the combustion chamber, it is ignited by a spark or other ignition system.
Detonation: Ignition leads to the formation of a detonation wave, which is a flame front that propagates at supersonic speed through the mixture of fuel and oxidizer. Detonation is a combustion process that occurs almost instantaneously and at very high pressures.
Expansion: The expansion of hot gases produced by detonation generates high pressure inside the chamber. This pressure pushes the gases toward the exit of the combustion chamber, creating thrust.
Exhaust: The ejected gases pass through an exhaust nozzle, further accelerating and increasing the thrust generated by the engine. The exit of the exhaust gases creates an equal and opposite reaction that propels the engine (and the vehicle to which it is attached) forward, according to Newton's third law.
Cleaning: After exhaust gases are expelled, the chamber should be "cleaned" or emptied of residual combustion gases.
Reload: Finally, the chamber is refilled with a new mixture of fuel and oxidizer, and the cycle can begin again.

This process occurs cyclically and at a frequency that can range from a few detonations per second to hundreds, depending on the size and design of the engine.

Typical PDE engines have several known problems in the management of detonation, such as uneven detonation or lack of detonation, problems with cooling and valve wear, and valve destruction due to supersonic speeds, problems that slow their development and keep them in a state of perpetual research.

Turbogenerator/turbofan: All conventional turbogenerators use a compressor and turbine connected by a centrally placed shaft. Both the compressor and turbine are composed of blades. To date, it is a technology mainly used for power generation and aero propulsion. Maintenance issues: They require constant maintenance to ensure efficiency. Components such as turbines and alternators are subjected to thermal and mechanical stress.

Efficiency and temperature: Efficiency can decrease as operating temperature increases. It is critical to manage heat and maintain efficient cooling systems.

Construction difficulties: Precision in construction is critical, as small errors can cause large inefficiencies or failures.

Costs: Construction and maintenance costs are high due to the complexity and precision required in the manufacture of parts.

Debris ingestion: Turbofan engines can ingest debris from runways, which can damage compressor blades and reduce efficiency.

Cracks in components: High temperatures and pressures can cause cracks in engine materials, especially in turbines and compressors.

Combustion problems: Ineffective combustion can lead to high emissions, reduced efficiency and potential engine failure.

Compressor blade erosion: Compressor blades can erode due to particles in the air, reducing efficiency and requiring costly replacement.

Wear and corrosion: Components such as bearings and turbines can degrade due to exposure to high temperatures and aggressive operating conditions (such as the presence of abrasive particles in the air).

Vibration: Excessive vibration can occur if components are not perfectly balanced, leading to structural damage and possible failure.

Cooling reliability: Failure in cooling systems can cause critical overheating and failure. Efficient heat management is crucial.

Therefore, it is a major objective to provide an engine that has greater efficiency in chemical-mechanical and chemical-propulsive processing, reduces harmful emissions, and maintains low cost and lower maintenance than current technology.

Another important objective of the invention is to provide a thruster that can be applied in a variety of aerospace contexts, as a main thrust system, instead of turbofan or turbojet for small and large aircraft.

Its geometry allows mounting parallel to the flight path or perpendicular to the vehicle, enabling static or vertical climb flight. In the latter configuration, movement of the engine is followed by displacement of the vehicle in reaction to the propulsive force. For this reason it can be used in the construction of with the purpose of transporting large loads or people.

### SUMMARY OF THE INVENTION

It is thus an object of the present invention to provide an engine that represents a significant advance in engine technology, specifically solving some problems of PDE, RDE and turbojet/turbofan with clear objectives of efficiency, sustainability and versatility. This object is achieved by means of an engine having the features of claim 1.

Compared with an RDE engine, the engine of the present invention improves detonation management, engine life, and increases the range of possible applications using its turbine. In addition, the supersonic flow is pulsating rather than rotary. Temperature management is done internally in the chamber by significantly lowering temperatures using a water injection system.

The engine of the invention, retains in common with a PDE the same combustion cycle, but solves all the problems previously described by differing in the mixer, in the one-way valve which is multiple small balls instead of reed or rotary, in the structure of the detonation chamber, in the number and positioning of spark plugs, in the combination of a needle turbine for energy extraction, and in 'water injection for temperature management. In conventional PDE engines, detonation is generated by a coil placed in the exhaust channel whose turbulence keeps the mixture inside the chamber for longer instead of using multiple ignitions as described in this patent. In addition, no known PDE engine has been designed to be used also as a generator.

Compared with turbojet/turbofan engines, the engine of the present invention, for the same purpose, is greatly simplified in construction, both of the detonation chamber and the turbine, which can be built with less sophisticated tools and technology, uses detonation instead of combustion, which is known to be more efficient. It uses water injection to effectively manage temperatures and can run on hydrogen, paving the way for the construction of liquid hydrogen-powered aircraft. The turbine itself in addition to being easier to build is also more efficient as its geometry greatly limits turbulence.

The state of the art also differs in the NOX removal circuit and the ability to use multiple fuels, currently no engines of any nature remove nitrogen before entering the combustion chamber by replacing it with water spray and are generally designed to use a single fuel.

The engine of the invention is equipped with valves and injectors that allow it to harness different fuels, such as hydrogen, gasoline, methane, log methanol, LPG, and all high combustion rate fuels. This invention has the following advantages:
**Efficiency in energy conversion:** The main challenge in engine design is the efficient conversion of the energy contained in the fuel into mechanical motion. If an engine can do this with high efficiency, this means that for every liter of fuel consumed, more "work" is produced, thus reducing overall fuel consumption and CO2 emissions.
**Reducing pollutants:** With growing concerns about climate change and air pollution, an engine's ability to emit fewer pollutants makes it not only environmentally responsible but also more attractive from a regulatory standpoint, as many nations are tightening regulations on emissions.
**Production costs:** The ability to produce an engine at a lower cost not only makes it cost-effective for manufacturers, but can also translate into a lower cost for consumers, facilitating the transition to more efficient and cleaner vehicles.
**Simplicity of construction:** A motor with only one rotating part is easier to assemble and may have less chance of mechanical failure than conventional motors. This could also reduce maintenance costs over time.
   Smaller size and energy density: A more compact engine with higher energy density means it can deliver the same (or more) amount of energy in a smaller space. This could revolutionize vehicle design.
**Versatility in fuel:** Hydrogen is seen by many as the fuel of the future because of its clean combustion that produces only water as a byproduct. However, the transition to new fuels must be gradual. Therefore, an engine that can run on both hydrogen and conventional fuels such as gasoline or LPG has a huge advantage.

### DESCRIPTION OF DRAWINGS

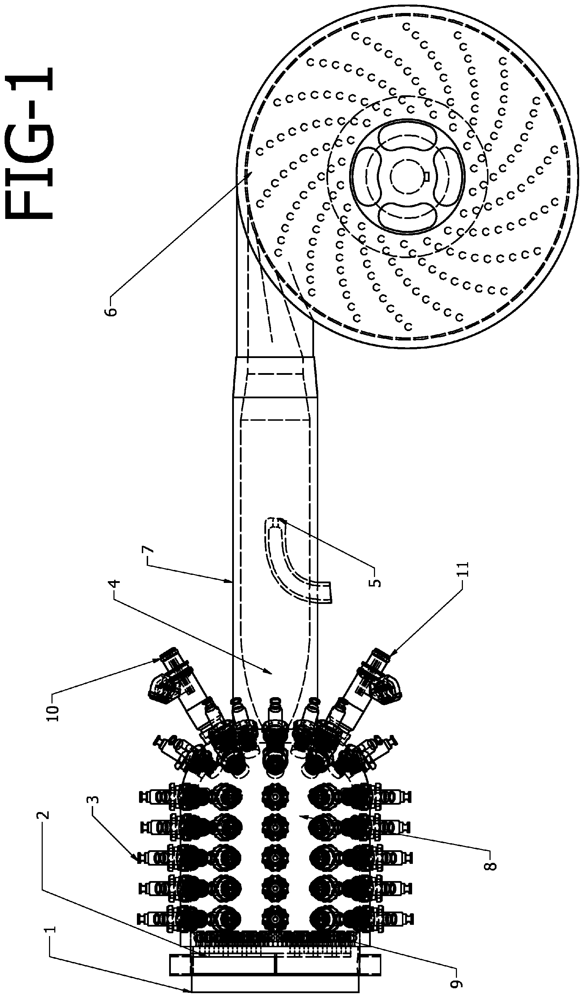

Fig 1 shows the engine complete with valve, detonation chamber, expansion tube and needle turbine,

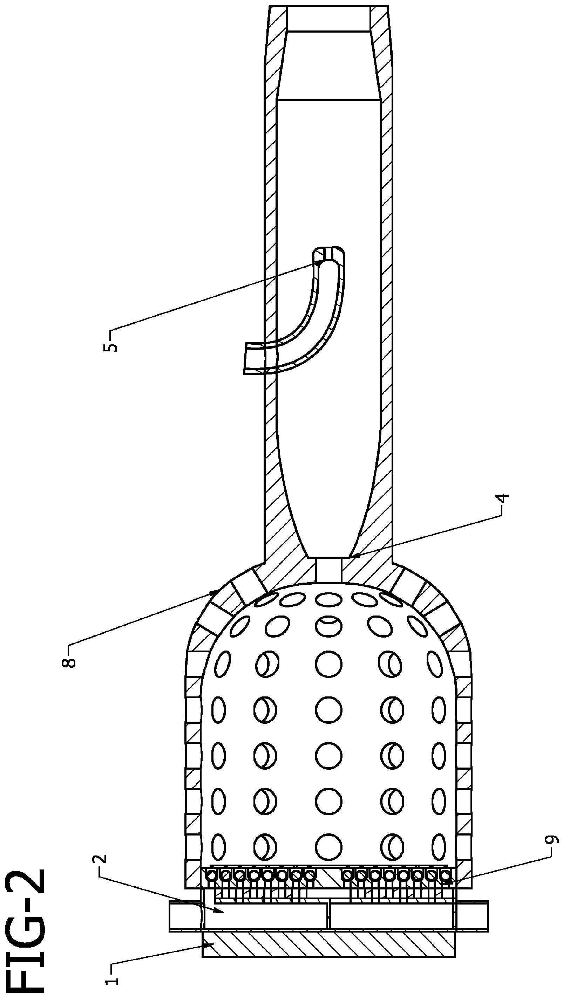

Fig 2 shows a cutaway of the valve, detonation chamber and expansion tube,

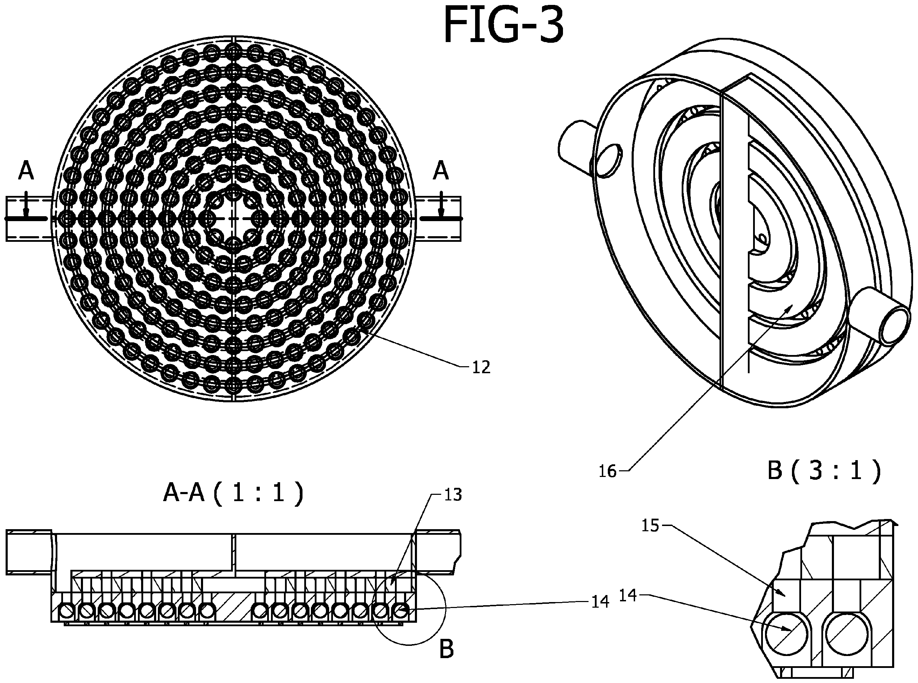

Fig 3 shows the view of the valve,

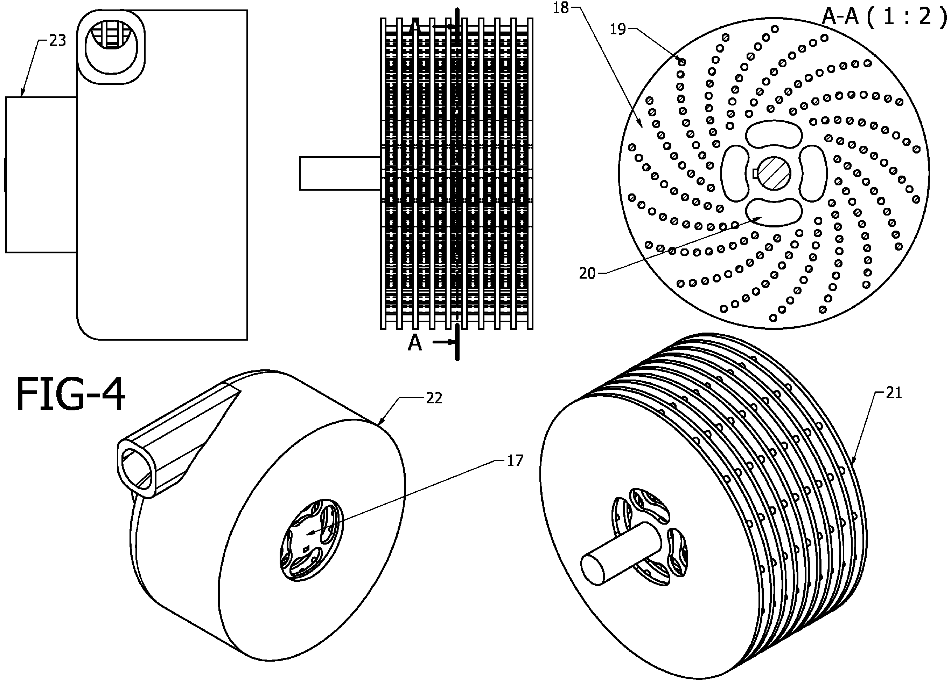

Fig 4 shows the view of the needle turbine.

### DETAILED DESCRIPTION OF PREFERRED EMBODIMENTS OF THE INVENTION

Starting from the air inlet into the mixer to the turbine exhaust, a list of components that are comprised in the engine of the invention are explained below.

Combustion Blend: The engine is designed to operate in multi-fuel mode, giving priority to fuels characterized by high combustion rates, such as hydrogen, gasoline, methane, and their analogs.

The ideal fuel mixture composition involves the integration of oxygen, hydrogen and water vapor. The addition of water vapor has the effect of moderating the temperature during combustion, simultaneously increasing the pressure and mass of the ejected gases, further enriching the range of possible stoichiometric ratios.

Several alternative combinations are possible, incorporating water vapor, atmospheric air, oxygen, and the fuel of choice. Each of these combinations produces variations in efficiency, operating costs and performance, while maintaining overall high values. Once the optimal composition for the fuel mixture has been determined, it is essential to perform accurate engine calibration so that pulsing resonance is preserved at the ideal frequency to maximize efficiency.

Nox elimination circuit. This circuit placed upstream of the system, before mixer 2 and aims to reduce the formation of nitrogen oxides (NOx), produced as a result of the high temperatures reached within the system. One of the main strategies adopted to minimize NOx production is to eliminate or significantly reduce the presence of nitrogen within the feed stream before it enters the detonation chamber.

To achieve this goal, a pre-treatment phase of the ambient air was designed:
Initially, the air is subjected to filtration, to remove any impurities.

The filtered air is then compressed and introduced into a separation system using oxygen concentrators based on membrane or zeolite technologies. These concentrators are capable of separating oxygen from other air components, particularly nitrogen, providing a high-purity oxygen stream.

The purified oxygen can then be introduced directly into the detonation chamber.

It should be emphasized that the adoption of this circuit is optional and is not primarily aimed at optimizing system efficiency, but rather at compliance with standards and regulations regarding NOx emissions.

For applications where efficiency is prioritized over minimizing NOx emissions, the system can be modified by replacing the oxygen concentrator with a centrifugal compressor. The latter ensures adequate air supply to the detonation system. Regardless of the choice of device-concentrator or compressor-it is imperative that they be calibrated and sized to ensure an optimal supply of oxidizer to the detonation chamber 8 .

Mixer. At the heart of the proposed system, between the one-way valve plate 9 and the magnet, is the gas mixer 2 . This component is designed to optimize the mixing of gases in the detonation chamber, significantly affecting the efficiency and stability of detonation.

### Main Features:

Specific Channels 16: The design includes small separate channels for the combustant and fuel. This separation is intentional, ensuring that each gas has a dedicated path to reach the orifices of the one-way valve.

Specific Distribution Orifices 15: For every orifice in the one-way valve 9 from which the fuel exits, there is another adjacent orifice from which the oxidizer exits. This alternating arrangement ensures that the two gases enter the detonation chamber 8 in immediate proximity to each other.

Promotion of Turbulent Mixing: This specific orifice arrangement facilitates turbulent mixing between combustant and fuel within the chamber. The turbulence generated ensures that the gases are optimally mixed before detonation, promoting more complete and efficient combustion.

Consideration for Liquid Fuels: If the fuel is in liquid form, the mixer section becomes irrelevant. In this case, all orifices 15 in the one-way valve 9 are dedicated to the combustion agent. Instead, the liquid fuel is injected directly into the chamber through an injector 10 ensuring that it is finely atomized and ready for efficient mixing with the gaseous combustant. Benefits and Advantages:
Combustion Efficiency: Through homogeneous mixing, more complete detonation is ensured, reducing unburned emissions and maximizing the thermodynamic efficiency of the system.
Operational Flexibility: The design takes into account both gaseous and liquid fuels, offering versatility in fuel choices and operating configurations.
Safety: By introducing gases separately and only near the detonation chamber, the risks of unwanted combustion or detonation outside the chamber are reduced.

Unidirectional valve. The unidirectional valve 9 consists of a plate of varying thickness, made of nonferromagnetic material resistant to high temperatures, preferably stainless steel. On the plate are orifices 15. geometrically conformed as an overlap of a cone to a cylinder. Each orifice 15 accommodates a movable ferromagnetic sphere 14 within it. A metal grid 12 is mounted above the conical section, with a design that allows gas to pass through but prevents the spheres 14 from escaping.

Spheres 14, free inside, are designed to oscillate or vibrate, allowing gas to flow through the cone section from the smaller diameter to the larger diameter. Under conditions of higher pressure coming from the larger-diameter conical section, the ball sits centrally in the cone, thus inhibiting gas flow.

An external magnet or solenoid 1 positioned outside the one-way valve 9 and away from the detonation chamber 8 is used to keep the ball in a resting or closed position. Alternatively, gravity can be exploited, although this limits the mounting orientation of the motor. In such circumstances, balls made of alternative materials such as ceramic or titanium can be used. The magnet with high power pulls all ferromagnetic balls toward it, but not the one-way valve body or other components.

### Functionality and Performance:

The flow of gas through the one-way valve 9 is regulated by the number and diameter of holes and corresponding spheres. A greater number of smaller spheres is favored over larger spheres. This allows rapid displacement and vibration of the spheres, thus optimizing the maximum pulsating frequency of the motor. In the developed prototype, the spheres have a diameter of 3 mm.

In operation, during each pulsation, the small balls 14 move or bounce off the grid 12, allowing the gas to flow. Later, during the detonation phase, they return to their original position, partly due to the external magnetic field, closing the inlet hole, preventing further gas entry and forcing the propagation of detonation toward the exhaust.

This configuration ensures efficient control of gas flow, which is essential for optimizing engine performance. In addition, the balls can vibrate for a very long time while withstanding the power, speed, and temperatures of detonations.

Detonation chamber. The detonation chamber 8 has a cylindrical conformation, made of a thick metal material. This material choice ensures resistance to the considerable pressures and temperatures sustained during detonation. Stainless steel is the preferred material for the construction of the chamber, however, depending on specific requirements and operating conditions, other metals or ceramics can be used, provided they provide thermal and corrosion resistance.

The one-way valve 9, previously described, is located on one end of the cylinder, while on the opposite end is the exhaust nozzle 4, which is designed to expel combustion gases.

### Components and Features:

Arranged on the inner wall of the chamber are several ceramic 3 spark plugs installed via a threaded hole . These candles are designed to generate plasma discharges with high power but short duration. Their operation is synchronized, ensuring simultaneous ignition.

When the oxidizer and fuel are introduced into the chamber, simultaneous ignition from different sources generates a pressure wave that converges toward the center of the chamber. This pressure wave further compresses the mixture, ensuring a complete and homogeneous detonation. Such an explosion produces a high-temperature gas jet with supersonic velocities exceeding Mach 2.

The chamber is equipped with a piezoelectric detonation sensor that monitors vibration and serves to time the system

The chamber is also prepared for the installation of a specific injector for liquid fuels 10. This option provides an alternative to mixer system 3, allowing greater flexibility in selecting and optimizing the combustion-fuel ratio.

The chamber is also equipped with a water mist injector 5. The water mist allows the speed and temperatures of detonation to be controlled to keep it within certain limits; it also increases the propulsive thrust of the engine and keeps the chamber clean of fouling. Discharge nozzle. The exhaust nozzle 4, located on the opposite end of detonation chamber 8 from the valve, has the crucial function of managing the outflow of combustion gases. This exhaust nozzle has a convergent-divergent configuration, also known as the "de Laval" design. This particular geometry allows progressive acceleration of the gases during the convergent phase, reaching supersonic velocities in the minimum section (nozzle throat) and finally expanding them in the divergent section, reducing the pressure and temperature of the exhaust gases but increasing the velocity.

Some technical aspects and calculation are hereafter described. The design of the 'discharge nozzle, particularly the bore diameter and specific convergent-divergent profile curves, are essential in defining the final velocity of the ejected gases and the operating pressures. The engineering and calculation of these parameters must be carefully performed considering the explosion and filling times of the detonation chamber. These times, in combination with nozzle properties, will define the optimal operating frequency of the engine.

The 'discharge nozzle can also be designed with materials resistant to high temperatures and cyclic thermal stress, such as nickel-based alloys or thermally stable ceramic coatings, to ensure optimal durability and integrity even under the most severe operating conditions. Discharge circuit. The core of this circuit is based on a DC current source with adjustable voltage. This current is subsequently modulated to a high frequency and transformed to a much higher voltage (about 20 kV) through the use of a coil.

A crucial element in this configuration is the Cockcroft-Walton voltage multiplier, which uses a combination of capacitors and diodes to further increase the voltage. This particular multiplier has two stages of multiplication, and its design ensures that the voltage produced is sufficient and stable to generate efficient plasma discharges. Each multiplier is associated with a single spark plug.

The capacitance of the voltage multiplier capacitors is of paramount importance. They must be precisely sized to operate at the desired frequency, which must be synchronized with the resonant frequency of the entire system. This ensures that the discharges produced are constant and powerful, allowing effective ignition of the mixture.

By assigning a multiplier for each glow plug, the need for a dedicated coil for each is eliminated. This design choice not only makes the circuit much more compact and simple, but also ensures an even distribution of voltage to each glow plug, allowing simultaneous discharge. This is critical to ensure simultaneous and uniform ignition of the fuel mixture. Expansion pipe. The expansion tube 7 acts as a critical intermediate between the detonation chamber and the turbine, having the critical role of conditioning the outgoing gases before they enter the turbine. It is in its nature to achieve a controlled and optimized transition between these two crucial stages.

Water Mist Injection. One of the most innovative aspects of this design is the injection of water mist inside the expansion tube. Injector 11 is designed to release water in an extremely fine, atomized form. This allows the water to evaporate rapidly, turning into vapor when it comes into contact with hot gases at high velocity. Its evaporation is highly endothermic, which means that it extracts a significant amount of heat from the gases and increases the mass and volume of gases entering the turbine. In addition, its conformation pushes the vapors in the same direction as the gases and promotes some natural suction of water.

The length of expansion tube 7 is determined based on the amount of water injected and its evaporation capacity before reaching the turbine. This ensures that all of the steam generated actually contributes to the gas pressure and mass, without introducing unevaporated water that could damage the turbine. Injecting water into expansion tube 7 not only prevents thermal wear on the turbine but also optimizes system efficiency. By subtracting heat from the gases, it is ensured that more thermal energy is converted into mechanical work, rather than being wasted as waste heat.

This conversion offers a dual benefit: on the one hand, the turbine is protected from thermal wear, and on the other hand, the overall efficiency of the system is increased. As a result, cheaper materials of construction can be opted for while maintaining stability over time. Some additional considerations are that it is essential to monitor and adjust the amount of water injected according to operating conditions to ensure that there are no excesses or shortages. An advanced control system could be implemented to automatically adjust water injection according to gas temperatures and operational requirements.

Needle turbine. After detonation, the gases experience a thermal decrease. However, their volume and kinetic velocity are increased. This supersonic vapor-gas mixture condition represents a highly corrosive environment for conventional vane-equipped turbines; in this situation, each water particle acts as a microprojectile. As a result, an innovative geometry was designed that is transversely applicable to different scenarios, maximizing efficiency, ensuring greater longevity and greatly simplifying implementation.

Vapors are channeled tangentially into a cylindrical chamber 22 with supersonic velocity. Inside, a rotor 21, supported by bearings 23, has a series of disks 18 arranged parallel and perpendicular to the axis of rotation, intersected by needles 19. The specific configuration, including the number of needles, their diameter, and their arrangement, is determined as a function of the fluid density and the expected angular velocity. Obviously, the needles are arranged in a balanced configuration that minimizes vibration during rotation; note that the turbine can easily exceed 60k rpm. The overall diameter of the rotor is also a critical parameter. These disks have central openings 20, which function as vents for gases and vapors to combine to escape from the exhaust 17

Upon impact with the outer structure of the rotor, the gases adopt a rotary motion. Viscous friction between the fluid and the plates, as well as with needles 19, channels the kinetic energy of the gases, transforming their motion into a rotary action of the rotor. As the angular velocity of the rotor increases, the centrifugal force also increases, inducing the gases in a motion toward the outer wall. However, the dynamics of the gases push toward the center, in the direction of the region at ambient pressure. The resultant of these forces tends to organize the gaseous flow in a spiralized laminar pattern, with the number of spirals correlated with the rotational velocity. This high-velocity gas interacts with the needles, yielding power and reducing its own velocity. The arrangement around the needles keeps the flow in a laminar regime, preventing the transition to a turbulent flow, due to the action of the centrifugal force. This architecture, which takes into account the boundary layer and fluid dynamics, through advanced simulations, has demonstrated an efficiency of more than 90 percent.

The material chosen for the plates and needles 19 is a high-quality stainless steel, which has shown remarkable corrosion and wear resistance properties. However, given the corrosive nature of supersonic regime gases and water particles, a solution coated with tungsten carbide or titanium nitride was adopted, which provides an additional protective barrier. Friction and stresses in bearings can be a significant source of energy loss and wear. Consequently, a high-speed bearing system placed outside the turbine was adopted. Cooling System. Although most of the water injected into the pipeline is converted to steam before reaching the turbine, the residual heat could raise the temperature of the rotor. Therefore, a passive cooling system is provided, which uses the surrounding air to dissipate excess heat, ensuring that the turbine remains within a safe operating temperature range. There is an advanced sensor system built in the turbine, which monitors rotor angular velocity, temperature, pressure and other crucial metrics. This data is then used by a control system that can automatically adjust various operating parameters, such as the amount of water injected, ensuring optimal and safe operation.

Before each assembly, a balancing process is carried out using specialized machinery that removes weight at specific points to make the rotating mass perfectly balanced.

The turbine is equipped with a quick inspection system, allowing operators easy access to key components for maintenance and inspection. This reduces downtime and ensures that any problems are identified and resolved quickly.

In summary, the presented turbine is a combination of advanced engineering principles and innovative solutions, which together make it highly efficient, durable, and suitable for demanding environments.

This turbine is designed to be combined with this engine, despite this, it can be used in many other traditional applications to replace common turbines that are more expensive and complex to make.

The main advantage of this engine is its outstanding chemical-mechanical and chemical-propulsive conversion efficiency due to its innovative design and gas detonation technique.

The ability to operate with a variety of fuels makes it versatile and adaptable to different applications.

Potential applications include electric generation for vehicles, such as cars, trucks, motorcycles, and as a rocket and airplane thruster in the turbine-free version. But not only that, given its high efficiency and ability to operate efficiently even at small size, it can also be used for domestic cogeneration, providing both heat and electricity for homes. For large industries or power plants, large-scale implementation could provide energy at reduced cost and with significantly lower emissions than traditional technologies. Given its efficiency, it can extend the distance that vehicles can travel by several kilometers.

In conclusion, this engine represents a significant breakthrough in propulsion technology and power generation, with the potential to revolutionize the energy and automotive industries by providing more efficient, sustainable and adaptable solutions to the challenges of our time. Detonation Group for Propulsive Thrust. When used primarily for propulsive thrust, the detonation assembly releases gas at high velocity through a nozzle, creating direct thrust. This approach is particularly effective in settings where intense propulsion is required in a short period of time, such as for air rockets or drones.

The advantages are that it
- Provides immediate and high thrust.
- Minimizes mechanical complexity, reducing potential failure points.
- Optimized for takeoff situations, rapid acceleration and high-speed flight.

## Claims

1. Engine comprising:
- a detonation chamber (8) for mixture combustion,
- a mixer (2) configured to receive oxygen, water vapor and fuel with a combustion rate greater than 1 meter per second, with which to form a mixture and distribute the mixture in said detonation chamber (8),
- a one-way valve (9) with orifices configured for mixture distribution in the detonation chamber (8), including ferromagnetic spheres (14) free to vibrate to open and close the mixture passage,
- an exhaust nozzle (4) of convergent-divergent configuration capable of expelling flue gases at supersonic speeds,
- a high-voltage circuit,
- a plurality of spark plugs (3) ignited simultaneously by the high-voltage circuit,
- a gas NOx elimination circuit,
- a needle turbine (6),
- a water injection system,
- a fuel injection system,
- a control circuit for motor management and
- sensors for monitoring operating conditions.

2. Engine according to claim 1, in which the plurality of spark plugs (3) is equal to or greater than ten, are positioned at a mutual distance of 15 to 30 mm from each other, and are uniformly arranged throughout the detonation chamber (8).

3. Engine according to claim 2, in which the one-way valve (9) includes a disc with orifices having a cone shape joined to a cylinder (13) and a metal grid (12) positioned over the orifices (15).

4. Engine according to claim 3, in which the one-way valve (9) also includes a magnet or electromagnet (1) positioned on the opposite side of the detonation chamber (8), configured to hold the spheres (14) during detonation in the closed position of the gas inlet and such as to seal the detonation chamber (8).

5. Engine according to claim 4, in which the mixer (2) is positioned outside the detonation chamber (8) formed by several channels positioned in such a way that the fuel exits close to the oxidizer for each orifice (15) of the one-way valve (9) and ensures turbulent mixing.

6. Engine according to claim 5, in which the water injection system includes a water injector (5) that is placed in the expansion tube (7) downstream of the detonation chamber (8).

7. Engine according to claim 6, in which the exhaust nozzle (4) is positioned at the outlet of the detonation chamber (8) so as to accelerate the combustion gases to the turbine or to the outside.

8. Engine according to claim 7, in which the turbine (6) is mounted tangent to the flow of combustion gases exiting the expansion tube (7) and is configured to convert the thrust generated by the vapors and hot gases into torque, and includes a rotor (21) equipped with disks (18) arranged at regular intervals between 0.5 mm and 4 mm apart and perpendicular to and connected to the axis of rotation of the turbine.

9. Engine according to claim 8, wherein the turbine needles (6) are a plurality (19) passing through the discs (18) parallel to the 'axis of rotation of the turbine and arranged in such a configuration as to generate a spiral and laminar flow of rotating combustion gases.

10. Engine according to claim 1, in which the NOx gas removal circuit includes an oxygen concentrator based on membrane or zeolite technologies positioned upstream of the mixer (2).
